# EUROPEAN PATENT SPECIFICATION

(11) **EP 3 985 350 B1**
(45) Date of publication and mention of the grant of the patent: **12.03.2025**
(21) Application number: 20201644.0
(22) Date of filing: 13.10.2020
(51) Int. Cl.: G01C 9/02, H01H 35/02, H01R 13/70, G01D 11/24

(54) **INCLINOMETER**
NEIGUNGSMESSER
INCLINOMÈTRE

(43) Date of publication of application: 20.04.2022
(73) Proprietor: Höhn Neigungstechnik GmbH, 71144 Steinenbronn (DE)
(72) Inventor: Höhn, Claus, 72657 Altenriet (DE)
(74) Representative: Mzb PartmbB

(56) References cited:
- EP-A1- 2 554 432
- US-A1- 2002 172 000
- US-A1- 2013 309 880
- US-A1- 2015 258 953
- US-A1- 2017 311 473
- US-A1- 2020 045 840

## Description

### Technical Field

The invention relates to a product and process as per the first portion of the independent claims.

### Background Art

An inclinometer, clinometer, tilt indicator, tilt sensor, tilt meter, slope alert, slope gauge, gradient meter, gradiometer, level gauge, level meter, declinometer, or pitch and roll indicator is an instrument used for measuring angles of slope or tilt, elevation, or depression of an object with respect to gravity's direction. By way of example, PTL1 discloses an inclinometer having a hemispherical body that houses a spirit level and is engaged with a metallic baseplate for mounting.

In industrial environments, inclinometers are frequently used to prevent, detect, and remedy dangerous or otherwise undesirable operating conditions of machinery and equipment. NPL1 presents an account of the applications in this area. To ensure reliable and accurate functioning of a sensor in such an environment, its housing plays a central role. Firstly, it must be designed to meet environmental (sealing, temperature, etc.) and robustness (shock, vibration, impact, etc.) requirements. Secondly, for precise operation of an inclination sensor, it is essential that it can be mounted on the object to be monitored exactly in the measuring axis or plane and that its position does not change over the lifetime or operating period of the device. This task is complicated by the fact that installation may occur at different locations depending on the characteristics of the object to be monitored. For example, it should be possible to mount an inclination sensor on a flat surface on top of an object, on a flat surface on a side of the object, on an axle or strut of the object, etc.

In a state-of-the-art industrial setting, tilt switches and sensors based on various operating principles and in several price segments are applied.

Simple inclination switch solutions are usually based on a mechanical sensor element such as a ball switch, pendulum switch, mercury switch, or electrolyte switch, whose signals may be processed electronically. In this segment, measurement accuracy is relatively low (> 1° of inclination); therefore, the aforementioned factors relating to measurement accuracy have little effect. Owing to their mechanical construction, such tilt switches are relatively large, and their use is severely restricted depending on their location relative to the monitored object.

In the mid-range price segment, inclination switches and sensors often use sensor elements based on microelectromechanical systems (MEMS) whose measurement signal is evaluated by a microcontroller. Sensors on this basis are available with an accuracy of up to approx. 1/10° of inclination. To correct measurement inaccuracies that occur during installation, the zero or switching point of such sensors can usually be readjusted by software upon installation. This readjustment needs to be carried out for each object to be monitored. Quality sensors in this price segment feature a metal housing that guarantees long-term stability of measurement results. However, the mounting options of this type of sensor are limited and depend on the design of its housing. As a rule, sensors of this class must be mounted on top of the object to be monitored.

In the high-end price segment, sensor elements employing capacitively evaluated measuring levels or high-precision MEMS are applied. These sensors usually have milled metal housings and ground base plates to achieve accuracies of up to approx. 0.01°. Housings are available for mounting upon an object as well as for fitting unto another surface of an object.

PTL2 discloses a connector with a sensing component which comprises an insulated base, a conductive terminal set, a printed circuit board, an insulated bottom plate and a metal case. PTL3 discloses a sensor mounting structure which includes a circuit board on which an inclination sensor is mounted to generate a signal of an inclination angle of a vehicle.

Using spring contacts to provide a flexible electrical connection between two circuit boards is known from PTL4.

PTL5 discloses a base for screwing onto the object to be measured.

PTL6 discloses a sensor of a modular configuration in which customer-specific connection geometries for the sensor can easily be implemented by injection-mold a different retaining part for each customer.

PTL7 relates to a sensor which is advantageously arranged in a flat tub shaped housing, for example an angle sensor or an inclination sensor. In an embodiment, the entire housing besides a cover that may be additionally provided is made from metal and not from plastic material.

### Summary of invention

The invention is directed at an inclination sensor having a modular design.

### Technical Problem

State-of-the-art solutions as described above generally offer limited options for mounting on the object to be monitored. Only high-grade inclination sensors provide for some degree of installation flexibility. Measurement accuracy of simple inclination sensors and switches is low. Products in this segment find limited use in industrial environments and therefore constitute niche offerings. High-quality solutions are expensive and require complex commissioning on the monitored object. This individual implementation entails considerable effort and increases the risk of faulty configuration for the machine or plant thus equipped.

### Solution to Problem

The problem is solved as per the second portion of the independent claims.

### Advantageous effect of invention

A metallic base element accommodates the sensor element and thus facilitates precise mounting of the sensor on the object to be monitored. Depending on the intended mounting conditions on the monitored object, this base element may take different forms - such as a baseplate, mounting bracket, or screw housing - to permit proper installation. Preferably, the mechanical configuration of the base is kept sufficiently simple to allow for inexpensive fabrication by conventional means, for example, chip machining or punch bending.

The modular body is designed to be positively connected to any of the metal bases available. It meets any environmental requirements placed on the sensor in terms of tightness, robustness, etc. and comprises the display elements and connector of the sensor, such as a cable outlet or threaded plug. The relatively complex structure of the module body can be manufactured cost-effectively in plastic using established fabrication techniques such as injection molding or 3D printing. To meet even higher mechanical specifications, the module body may also be made of metal, for example, by means of aluminum or zinc die casting or 3D printing. Due to the modular architecture of such sensor, high accuracy is achieved at low manufacturing costs. Furthermore, the sensor offers various options of mounting on the monitored object thanks to the variations in shape of its base, thus minimizing the effort required for commissioning on a specific machine.

Furthermore, the modular design of the sensor housing offers the advantage that a customized sensor built specifically for a given function can be configured by customizing the individual circuit boards integrated in each part of the device.

For instance, a board mounted on the base module may be dedicated to precise acquisition of sensor data whereas different boards with various sensor interfaces such as 4 to 20 mA, digital outputs, or an I/O link could be integrated into the main body.

On the one hand, this approach offers the advantage that the board for acquiring the sensor data only needs to be designed once for different sensor variants. Moreover, the modular structure of the sensor means that the circuit board can be fitted to the base and calibrated at an early stage of production. Since the base also serves to mount the sensor on the object to be monitored once the sensor has been assembled, calibration of the sensor may be performed even with this subcomponent alone. As the circuit board is still readily accessible at this stage and all electrical parameters can easily be recorded, for example, using a needle adapter, calibration is thus considerably simplified.

On the other hand, the proposed concept reduces the effort involved in developing a novel sensor interface to only that functionality essential for supporting said interface.

Using such module-based architecture, an entire sensor family can be established efficiently and cost-effectively.

### Brief description of drawings

Figure 1 shows the schematic configuration of a tilt sensor based on a modular sensor design.
Figure 2 shows a variant using an angular base.
Figure 3 shows a variant using a screw-flanged base.
Figure 4 shows a variant using a screw-shaped base.

### Description of embodiments

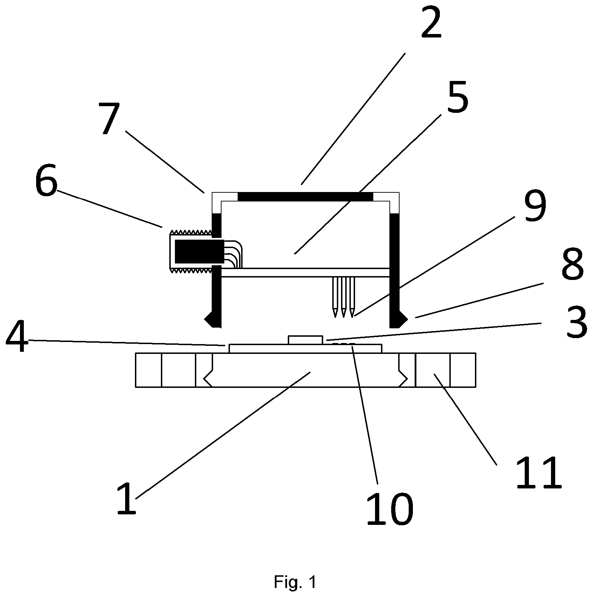

Fig. 1 shows the basic layout and main components of a tilt sensor based on a modular sensor package comprising a metallic baseplate 1 and a modular body 2.

The metallic baseplate 1 defines the reference plane of the sensor relative to the object to be monitored. To obtain reliable measurements, the baseplate 1 needs to provide for high mechanical accuracy and stability over the entire lifetime of the sensor. The baseplate 1 serves to accommodate a circuit board 4 with an integrated sensor element 3. It also encompasses mounting holes 11 for secure fastening of the sensor to the monitored object (not depicted).

The modular body 2 accommodates a second circuit board and comprises a molded-on connector 6 and display elements 7. Furthermore, it is equipped with detent noses 8 that allow for a form-fit connection to the metallic baseplate 1.

As soon as interlocking between the metallic baseplate 1 and sensor body 2 is established, spring contacts 9 touch their contact areas 10, reliably transmitting electrical signals from circuit board 4 to circuit board 5. Alternatively, which is not covered by the scope of the invention, electrical contact between circuit board 4 and circuit board 5 may be established by other suitable connecting elements such as plugs or flexible conductors.

Preferably, circuit board 4 is laid out such as to acquire the measurement data whilst circuit board 5 incorporates function blocks for transmitting the data via connector 6 and visualize it by means of display elements 7.

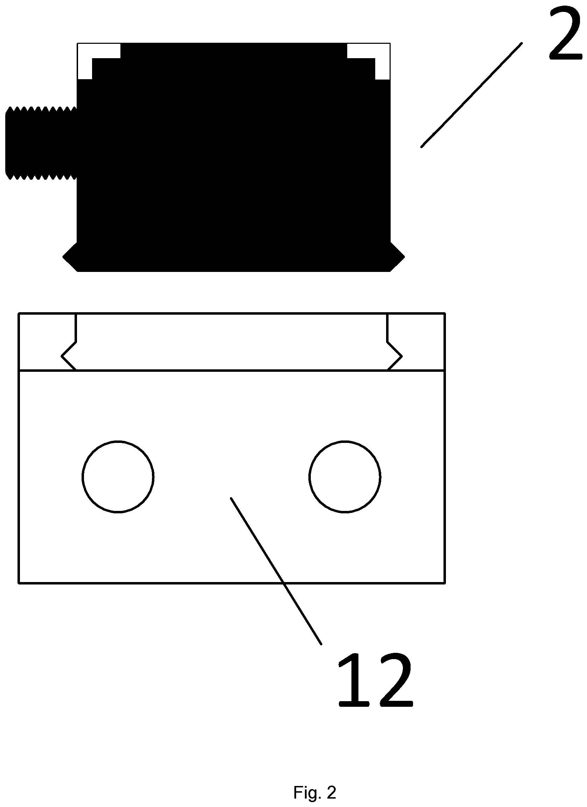

In Fig. 2, an example of the inclination sensor is illustrated that uses an angular base 12. This design is particularly suitable whenever the inclination sensor is to be mounted on a flat surface on the side of the object to be monitored.

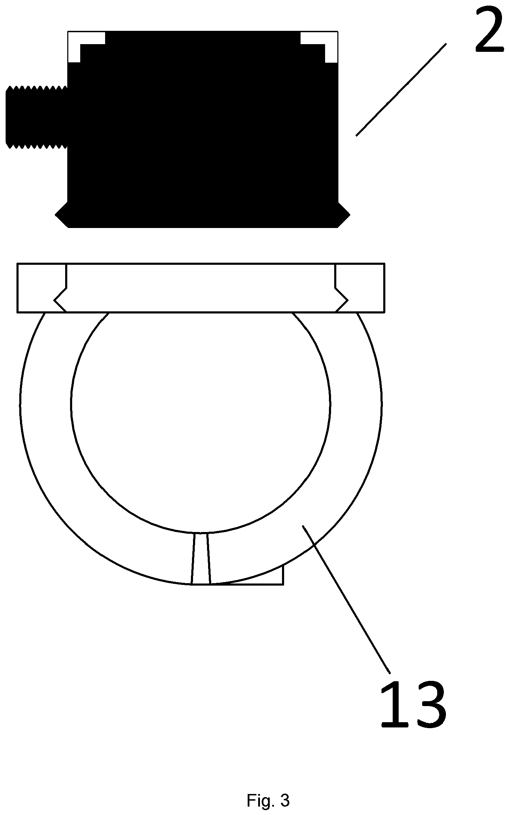

Figure 3 depicts a version of the inclination sensor using a baseplate with a screw flange 13. This arrangement is best suited for mounting the inclination sensor on an axle of the object to be monitored.

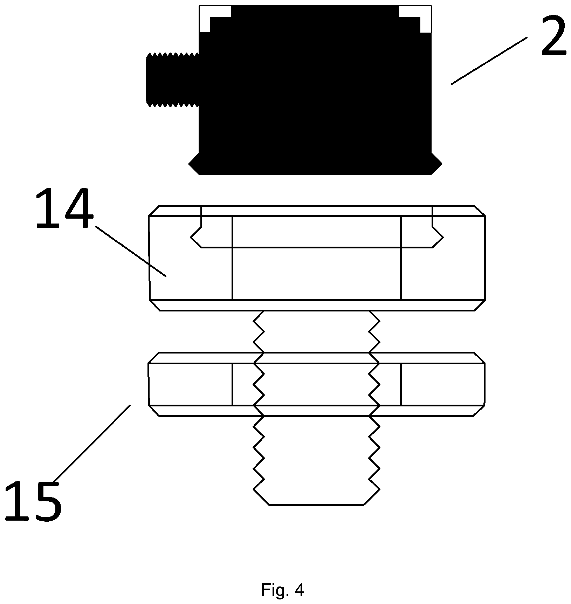

Figure 4 presents the inclination sensor with a screw-shaped base 14. This model should be considered for applications where the inclination sensor is to be screwed onto the object to be monitored. A locknut 15 helps align an inclination sensor configured as an anti-tilt switch such that the injection-molded connector 6 faces towards the desired direction according to the application at hand.

### Industrial applicability

The invention is applicable, inter alia, throughout the electronics industry.

### Reference signs list

- 1: Baseplate
- 2: Body
- 3: Sensor element
- 4: First circuit board
- 5: Second circuit board
- 6: Connector
- 7: Display elements
- 8: Detent noses
- 9: Spring contacts
- 10: Contact areas
- 11: Mounting holes
- 12: Angular base
- 13: Screw flange
- 14: Screw-shaped base
- 15: Locknut

### Citation list

The following literature is cited throughout this document.

### Patent literature

PTL1: US 1820791 A (FORREST ROBERT J) 25.08.1931
PTL2: US 2013/309880 A1 (CHANG NAI-CHIEN [TW]) 21.11.2013
PTL3: EP 2 554 432 A1 (KOITO MFG CO LTD [JP]) 06.02.2013
PTL4: US 2020/045840 A1 (KRAUS MATTHIAS [DE]) 06.02.2020
PTL5: US 2015/258953 A1 (MURRAY JR NEIL GORDON [US] ET AL) 17.09.2015
PTL6: US 2002/172000 A1 (WALTER KLAUS [DE] ET AL) 21.11.2002
PTL7: US 2017/311473 A1 (STEINICH KLAUS MANFRED [DE]) 26.10.2017

### Non-patent literature

NPL1: FRADEN, Jacob. Handbook of Modern Sensors - Physics, Designs and Applications. 5th edition. Cham Heidelberg New York Dordrecht London: Springer, 2016. ISBN 3319193023. p.379-411.

## Claims

1. Inclinometer, such as a tilt switch, having
a preferably metallic base (1, 12, 14) for mounting the inclinometer and
a preferably plastic body (2) engaged with the base (1, 12, 14) and housing a sensor element (3) mounted upon the base (1, 12, 14),
the base (1, 12, 14) comprising a first circuit board (4) bearing the sensor element (3) and exhibiting contact areas (10) facing a second circuit board (5),
the body (2) containing the second circuit board (5) for processing signals acquired through the first circuit board (4) and, bilaterally, exhibiting detent noses (8) engaging with the base (1, 12, 14),
the second circuit board (5) bearing spring contacts (9) biased against the contact areas (10).

2. Inclinometer as per Claim 1,
**characterized in that**
the body (2) comprises a connector (6), such as a threaded plug, preferably molded to the body (2) for outputting the processed signals.

3. Inclinometer as per Claim 1 or Claim 2,
**characterized in that**
the body (2) comprises display elements (7) for visualizing the processed signals.

4. Inclinometer as per any of the preceding claims,
**characterized in that**
the base (1, 12, 14) is flat (1) or angular (12), preferably having mounting holes (11) or a screw flange (13).

5. Inclinometer as per any of Claim 1 through Claim 3,
**characterized in that**
the base (1, 12, 14) is screw-shaped (14) and adapted to be fastened using a locknut (15) upon mounting the inclinometer.

6. Process for the manufacture of an inclinometer as per any of the preceding claims wherein
the body (2) is selected among a variety of bodies depending on connectivity requirements,
the base (1, 12, 14) is selected among a variety of bases depending on mounting conditions and
the selection of the body (2) further depends on operating conditions, namely, dust, shock, vibration, rain, humidity, radiation, altitude, and temperature.

7. Process as per Claim 6,
**characterized in that**
the bases are manufactured by chip machining or punch bending and
the bodies are manufactured by injection molding, diecasting, or 3D printing.

## Patentansprüche

1. Neigungsmesser, beispielsweise ein Neigungsschalter, mit
einer vorzugsweise metallischen Grundplatte (1, 12, 14) zur Befestigung des Neigungsmessers und
einem vorzugsweise aus Kunststoff bestehenden Gehäuse (2), das mit der Grundplatte (1, 12, 14) in Eingriff steht und ein auf der Grundplatte (1, 12, 14) angebrachtes Sensorelement (3) aufnimmt,
wobei die Grundplatte (1, 12, 14) eine erste Leiterplatte (4) umfasst, die das Sensorelement (3) trägt und Kontaktflächen (10) aufweist, die einer zweiten Leiterplatte (5) gegenüberliegen,
das Gehäuse (2) die zweite Leiterplatte (5) zur Verarbeitung der durch die erste Leiterplatte (4) erfassten Signale enthält und beidseitig Rastnasen (8) aufweist, die in die Grundplatte (1, 12, 14) eingreifen, und
die zweite Leiterplatte (5) Federkontakte (9) trägt, die gegen die Kontaktflächen (10) vorgespannt sind.

2. Neigungsmesser nach Anspruch 1,
**dadurch gekennzeichnet, dass**
das Gehäuse (2) einen vorzugsweise an das Gehäuse (2) angespritzten Stecker (6), beispielsweise einen Gewindestecker, zur Ausgabe der verarbeiteten Signale aufweist.

3. Neigungssensor nach Anspruch 1 oder Anspruch 2,
**dadurch gekennzeichnet, dass**
das Gehäuse (2) Anzeigeelemente (7) zur Visualisierung der verarbeiteten Signale aufweist.

4. Neigungssensor nach einem der vorhergehenden Ansprüche,
**dadurch gekennzeichnet, dass**
die Grundplatte (1, 12, 14) flach (1) oder eckig (12) ist und vorzugsweise Befestigungslöcher (11) oder einen Schraubflansch (13) aufweist.

5. Neigungsmesser nach einem der Ansprüche 1 bis 3,
**dadurch gekennzeichnet, dass**
die Grundplatte (1, 12, 14) schraubenförmig (14) ist und bei der Montage des Neigungsmessers mit einer Kontermutter (15) befestigt werden kann.

6. Verfahren zur Herstellung eines Neigungsmessers nach einem der
vorhergehenden Ansprüche, wobei
das Gehäuse (2) abhängig von den Anforderungen an die Anschlussmöglichkeiten aus einer Vielzahl von Gehäusen ausgewählt wird,
die Grundplatte (1, 12, 14) abhängig von den Montagebedingungen aus einer Vielzahl von Grundplatten ausgewählt wird und
die Auswahl des Gehäuses (2) ferner von den Betriebsbedingungen abhängt, nämlich von Staub, Stößen, Vibrationen, Regen, Feuchtigkeit, Strahlung, Höhe und Temperatur.

7. Verfahren nach Anspruch 6,
**dadurch gekennzeichnet, dass**
die Grundplatten durch spanabhebende Bearbeitung oder Stanzbiegen hergestellt werden und
die Gehäuse durch Spritzgießen, Druckgießen oder 3D-Druck hergestellt werden.

## Revendications

1. Inclinomètre, tel qu'un basculeur, comportant
une base (1, 12, 14), de préférence métallique, pour le montage de l'inclinomètre et
un corps (2), de préférence en plastique, en prise avec la base (1, 12, 14) et abritant un élément capteur (3) monté sur la base (1, 12, 14),
la base (1, 12, 14) comprend une première carte de circuit imprimé (4) portant l'élément capteur (3) et présentant des zones de contact (10) en face d'une deuxième carte de circuit imprimé (5),
le corps (2) contenant la seconde carte de circuit imprimé (5) pour le traitement des signaux acquis par la première carte de circuit imprimé (4) et,
bilatéralement, présentant des nez de crans (8) en prise avec la base (1, 12, 14),
la deuxième carte de circuit imprimé (5) portant des contacts à ressort (9) appliqués contre les zones de contact (10).

2. Inclinomètre selon la revendication 1,
**caractérisé en ce que**
le corps (2) comprend un connecteur (6), tel qu'un bouchon fileté, de préférence moulé sur le corps (2) pour la sortie des signaux traités.

3. Inclinomètre selon la revendication 1 ou la revendication 2,
**caractérisé en ce que**
le corps (2) comprend des éléments d'affichage (7) pour visualiser les signaux traités.

4. Inclinomètre selon l'une quelconque des revendications précédentes,
**caractérisé en ce que**
la base (1, 12, 14) est plate (1) ou angulaire (12), de préférence avec des trous de fixation (11) ou une bride de vissage (13).

5. Inclinomètre selon l'une quelconque des revendications 1 à 3,
**caractérisé en ce que**
la base (1, 12, 14) est en forme de vis (14) et adaptée pour être fixée à l'aide d'un contre-écrou (15) lors du montage de l'inclinomètre.

6. Procédé de fabrication d'un inclinomètre selon l'une
quelconque des revendications précédentes dans lequel
le corps (2) est choisi parmi une variété de corps en fonction des exigences de connectivité,
la base (1, 12, 14) est choisie parmi une variété de bases en fonction des conditions de montage et
la sélection du corps (2) dépend en outre des conditions de fonctionnement, à savoir la poussière, les chocs, les vibrations, la pluie, l'humidité, les radiations, l'altitude et la température.

7. Procédé selon la revendication 6,
**caractérisé en ce que**
les bases sont fabriquées par usinage par enlèvement de copeaux ou par pliage à l'emporte-pièce et
les corps sont fabriqués par moulage par injection, moulage sous pression ou impression 3D.
